# EUROPEAN PATENT APPLICATION

(11) **EP 3 852 488 A1**
(43) Date of publication of application: **21.07.2021**
(21) Application number: 18933019.4
(22) Date of filing: 10.09.2018
(51) Int. Cl.: H04W 88/02, H04L 27/26, H04W 72/04, H04W 72/12

(54) **USER TERMINAL AND WIRELESS COMMUNICATION METHOD**

(71) Applicant: NTT DoCoMo, Inc., Tokyo 100-6150 (JP)
(72) Inventor: TAKEDA, Kazuki, Tokyo 100-6150 (JP); MATSUMURA, Yuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2018/033506
(87) International publication number: WO 2020/053941

(57) **Abstract**

To appropriately control specification of a TCI state for a user terminal, a user terminal according to an aspect of the present disclosure includes a receiving section that receives downlink control information including a field specifying a state of transmission configuration indication (TCI), and a control section that determines a state of TCI specified by the field, based on at least one of a cell scheduled in accordance with the downlink control information and a bandwidth part (BWP) specified by the downlink control information.

## Description

### Technical Field

The present disclosure relates to a user terminal and a radio communication method in next-generation mobile communication systems.

### Background Art

In UMTS (Universal Mobile Telecommunications System) networks, the specifications of Long Term Evolution (LTE) have been drafted for the purpose of further increasing high speed data rates, providing lower latency and so on (see Non-Patent Literature 1). For the purpose of further high capacity, advancement of LTE (LTE Rel. 8, Rel. 9), and so on, the specifications of LTE-A (LTE-Advanced, LTE Rel. 10, Rel. 11, Rel. 12, Rel. 13) have been drafted.

Successor systems of LTE (referred to as, for example, "FRA (Future Radio Access)," "5G (5th generation mobile communication system)," "5G+ (plus)," "NR (New Radio)," "NX (New radio access)," "FX (Future generation radio access)," "LTE Rel. 14," "LTE Rel. 15" (or later versions), and so on) are also under study.

In existing LTE systems (for example, LTE Rel. 8 to Rel. 14), a user terminal (UE (User Equipment)) controls reception of a downlink shared channel (for example, PDSCH (Physical Downlink Shared Channel) based on downlink control information (DCI (Downlink Control Information, also referred to as DL assignment and so on) transmitted via a downlink control channel (for example, PDCCH (Physical Downlink Control Channel). The user terminal controls transmission of an uplink shared channel (for example, PUSCH (Physical Uplink Shared Channel) based on DCI (also referred to as UL grant and so on).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For a future radio communication system (hereinafter referred to as NR), a study is underway to perform communication by utilizing beam forming (BF (beamforming)). Thus, a study is conducted about the user terminal controlling reception processing (for example, at least one of reception, demapping, demodulation, and decoding) for a channel based on the state of transmission configuration indication or transmission configuration indicator (TCI) (TCI state) of the channel.

The TCI state is information related to quasi-co-location (QCL) of a channel or a signal and is also referred to as a spatial reception parameter and so on. The TCI state is specified for the user terminal for each channel or each signal. The user terminal determines at least one of a transmission beam (Tx beam) and a reception beam (Rx beam) for each channel based on the TCI state specified for each channel. A study is also underway to notify the UE of DCI for scheduling a physical shared state, the DCI including a field specifying the TCI state (also referred to as a TCI field).

However, a sufficient study is not conducted about how to control, in a case that scheduling between different carriers (cross carrier scheduling) is applied, interpretation of the TCI field in a carrier scheduled in accordance with the DCI for other carrier. In other respects, a sufficient study is not conducted about how to control interpretation of the TCI field included in the DCI in a case that the DCI is employed to specify a bandwidth part (BWP) employed to transmit and/or receive a channel or a signal (for example, switching or the like is performed).

The present invention has been made in view of the above, and it is therefore an object of the present invention to provide a user terminal and a radio communication method that allow appropriate control of specification of a TCI state for a user terminal.

### Solution to Problem

A user terminal according to an aspect of the present disclosure includes a receiving section that receives downlink control information including a field specifying a state of transmission configuration indication (TCI); and a control section that determines a state of TCI specified by the field, based on at least one of a cell scheduled in accordance with the downlink control information and a bandwidth part (BWP) specified by the downlink control information.

### Advantageous Effects of Invention

According to an aspect of the present disclosure, specification of a TCI state for a user terminal can be appropriately controlled.

### Brief Description of Drawings

FIG. 1 is a diagram to show an example of cross carrier scheduling;
FIG. 2 is a diagram to show an example in a case that a TCI field value is separately configured for each cell;
FIG. 3 is a diagram to show another example of cross carrier scheduling;
FIG. 4 is a diagram to show an example in a case that the TCI field value is separately configured for each BWP in the cell;
FIG. 5 is a diagram to show an example of BWP switching;
FIG. 6 is a diagram to show an example of a schematic structure of a radio communication system according to the present embodiment;
FIG. 7 is a diagram to show an example of an overall structure of a radio base station according to the present embodiment;
FIG. 8 is a diagram to show an example of a functional structure of the radio base station according to the present embodiment;
FIG. 9 is a diagram to show an example of an overall structure of a user terminal according to the present embodiment;
FIG. 10 is a diagram to show an example of a functional structure of the user terminal according to the present embodiment; and
FIG. 11 is a diagram to show an example of a hardware structure of the radio base station and the user terminal according to the present embodiment.

### Description of Embodiments

### (TCI state)

For NR, a study is conducted about the user terminal controlling reception processing (at least one of, for example, reception, demapping, demodulation, and decoding) for a channel based on the state of transmission configuration indication or transmission configuration indicator (TCI) (TCI state).

Here, the TCI state is information related to quasi-co-location (QCL) of a channel or a signal and is also referred to as a spatial reception parameter, spatial information (spatial info), and so on. The TCI state is specified for the user terminal for each channel or each signal. The user terminal may determine at least one of a transmission beam (Tx beam) and a reception beam (Rx beam) for each channel based on the TCI state specified for each channel.

The TCI state may be identified by a certain identifier (TCI state ID (TCI-StateId)) and indicate (include) information (QCL information (QCL-Info)) related to QCLs of a target channel/signal (or a reference signal for the channel (or an antenna port for the reference signal)) and another signal (for example, another downlink reference signal (DL-RS (Downlink Reference Signal) or uplink reference signal (UL-RS (Uplink Reference Signal)).

QCL (Quasi-Co-Location) refers to an indicator for statistical characteristics of a channel/signal and is also referred to as quasi-co-location. The UE or user terminal may control, based on information (QCL information) related to the QCL of at least one of certain channels and signals (channel/signal), reception processing or transmission processing for the channel/signal. The reception processing corresponds to at least one of, for example, demapping, demodulation, and decoding. The transmission processing corresponds to at least one of mapping, modulation, and coding.

For example, in a case that a certain signal and another signal are in a QCL relationship, this may mean that at least one of doppler shift, doppler spread, average delay, delay spread, and spatial parameters (for example, a spatial reception parameter (spatial Rx parameter)) can be assumed to be identical between the plurality of different signals (the signals can be assumed to be in QCL in terms of at least one of these).

The spatial reception parameter may correspond to a reception beam (for example, a reception analog beam) or a transmission beam (for example, a transmission analog beam) of the user terminal and that the beam may be identified based on the spatial QCL. Note that the QCL or at least one element of the QCL in the present disclosure may be interpreted as sQCL (spatial QCL).

A plurality of types of the QCL (QCL types) may be defined. For example, four QCL types A to D may be provided that involve different parameters (or parameter sets) that can be assumed to be identical, and the parameters are illustrated below.
- QCL type A: doppler shift, doppler spread, average delay, and delay spread,
- QCL type B: doppler shift and doppler spread,
- QCL type C: doppler shift and average delay, and
- QCL type D: spatial reception parameter.

The information related to the QCL as described above (QCL information or QCL-Info) may be specified for each channel. The QCL information for each channel may include (or indicate) at least one of the following pieces of information:
- Information indicating the above-described QCL type (QCL type information),
- Information related to a reference signal (RS) that is in a QCL relationship with each channel (RS information),
- Information indicating a carrier (cell) in which the RS is located.
- Information indicating a bandwidth part (BWP) in which the RS is located, and
- Information indicating the spatial reception parameter (for example, an Rx beam) for each channel.

Note that the channel for which the TCI state is specified may be at least one of a downlink shared channel (PDSCH (Physical Downlink Shared Channel), a downlink control channel (PDCCH (Physical Downlink Control Channel), an uplink shared channel (PUSCH (Physical Uplink Shared Channel)), and an uplink control channel (PUCCH (Physical Uplink Control Channel)).

The RS that is in the QL relationship with the channel may be, for example, a synchronization signal block (SSB) or a channel state information-reference signal (CSI-RS). The SSB is a signal block including at least one of a primary synchronization signal (PSS), a secondary synchronization signal (SSS), and a broadcast channel (PBCH (Physical Broadcast Channel).

### <TCI State for PDCCH>

The TCI state for the PDCCH may specify information related to an RS that is in the QCL relationship with the PDCCH (or a demodulation reference signal (DMRS (DeModulation Reference Signal) for the PDCCH) (the information is, for example, a resource for the RS). The DMRS may be replaced with an antenna port for the DMRS (DMRS port) or a group of DMRS ports (DMRS port group) or the like.

For the user terminal, one or more TCI states may be configured for each control resource set (CORESET) through higher layer signaling. In a case that one or more TCI states per CORESET is configured, a single TCI state may be activated through MAC (Medium Access Control) signaling.

Here, for example, the higher layer signaling may be any one or combinations of RRC (Radio Resource Control) signaling, broadcast information, and the like. For example, the broadcast information may be master information blocks (MIBs), system information blocks (SIBs), minimum system information (RMSI (Remaining Minimum System Information)), and the like. For example, the MAC signaling may use MAC control elements (MAC CE), MAC PDUs (Protocol Data Units), and the like.

The CORESET may be associated with a search space including one or more PDCCH candidates. Each CORESET may be associated with one or more search spaces. The user terminal may monitor a search space to detect the PDCCH (DCI).

PDCCH candidates are resource units to each of which one PDCCH is mapped and may be constituted of, for example, control channel elements (CCEs) the number of which corresponds to an aggregation level. The search space may include PDCCH candidates the number of which corresponds to the aggregation level.

Note that, in the present disclosure, the "CORESET," "search space (or search space set)," "PDCCH candidate (or a set of one or more PDCCH candidates (PDCCH candidate set)," "downlink control channel (for example, PDCCH),"and "downlink control information (DCI)" may be interchangeably interpreted. "Monitoring" may be interpreted as "at least one of blind decoding and blind detection".

For example, the user terminal may control the reception processing for the PDCCH based on the TCI state corresponding to the CORESET (or the TCI state activated for the CORESET). Specifically, the user terminal may perform the reception processing for the PDCCH on the assumption that the transmission is performed by using the same Tx beam as that for the RS specified by the TCI state. The user terminal may determine the spatial reception parameter (Rx beam) for the PDCCH based on the TCI state.

### <TCI State for PDSCH>

The TCI state for the PDSCH may specify information related to an RS that is in the QCL relationship with the PDSCH (or a DMRS for the PDSCH) (the information is, for example, a resource for the RS). The DMRS may be replaced with a DMRS port, a DMRS port group, or the like.

The user terminal may be notified of (configured with) M (M ≥ 1) TCI states for the PDSCH (QCL information for M PDSCHs) through higher layer signaling. Some of the M TCI states may be activated through MAC signaling. The value of a certain field (for example, the TCI field) in the DCI for scheduling the PDSCH may indicate one of the configured (or activated) TCI states.

The user terminal may control the reception processing for the PDSCH based on the TCI state indicated by the certain field value in the DCI. Specifically, the user terminal may perform the reception processing for the PDSCH on the assumption that transmission is performed by using the same Tx beam as that for the RS specified by the TCI state. The user terminal may determine the spatial reception parameter (Rx beam) for the PDCCH based on the TCI state.

A study is underway to configure, for each control resource set (CORESET), the certain field in the DCI specifying the TCI state (for example, the TCI field). For example, a network (for example, a base station) controls the presence of configuration of the TCI field in the DCI by utilizing a certain field included in higher layer parameters (for example, ControlResourceSet) employed for configuration of the CORESET (for example, tci-PresentInDCI).

In a case that the TCI field is configured, a TCI field for certain bits (for example, 3 bits) is configured in the DCI. To set payload sizes for pieces of DCI (for example, DCI format 1_1) corresponding to a respective plurality of CORESETs to be the same, 3-bit zero padding may be added to other CORESETs not utilizing the TCI field.

The TCI field included in the DCI is employed to specify the TCI state of the physical shared channel (for example, the PDSCH) scheduled in accordance with the DCI. For example, when the PDSCH is scheduled by the DCI, the UE determines the TCI state applied to the PDSCH, based on the TCI field value included in the DCI (certain bit value or certain code point).

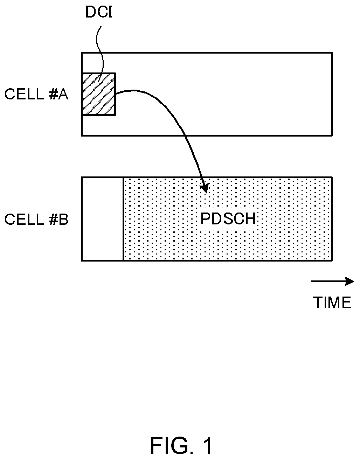

Incidentally, in NR, a method is supported in which the DCI transmitted in a first cell is employed to control scheduling of the physical shared channel (for example, the PDSCH) in another cell (for example, a second cell) (see FIG. 1) (this method is also referred to as cross carrier scheduling). In FIG. 1, the DCI transmitted in the first cell (CC #0) is used to schedule the PDSCH in the second cell (CC #1). In this case, the first cell may be referred to as a cell performing scheduling (scheduling cell), and the second cell may be referred to as a cell to be scheduled (scheduled cell).

In NR, it is assumed to involve a mixture of a plurality of user terminals in a supported bandwidth (various BW UE capabilities). Thus, for NR, a study is conducted about semi-static configuration of one or more partial frequency bands in a carrier. The frequency bands (for example, 50 MHz, 200 MHz, or the like) in the carrier are referred to as partial bands, bandwidth parts (BWPs), or the like.

Activation or deactivation of a BWP may be controlled. Activation of the BWP refers to the state in which the BWP is available (or to transition to the state in which the BWP is available) and is also referred to as activation, enabling, or the like of configuration information regarding the BWP (BWP configuration information). Deactivation of the BWP refers to the state in which the BWP is unavailable (or to transition to the state in which the BWP is unavailable) and is also referred to as deactivation, disabling, or the like of the BWP configuration information. Scheduling of the BWP activates the BWP.

For example, for the UE, one or more BWPs may be configured for each cell, and the BWP to be activated may be controlled based on at least one of the downlink control information and a timer. An operation for switching between activation and deactivation of the BWP as described above may be referred to as BWP switching.

However, a sufficient study is not conducted about how to interpret the TCI field to determine the TCI state in a cell scheduled in accordance with the DCI for a different cell in a case that cross carrier scheduling between different carriers (cells or CCs) is employed. In a case that the TCI field in the DCI fails to be appropriately interpreted, the appropriate TCI state fails to be determined in cross carrier scheduling, leading to degradation of communication quality.

In other respects, a sufficient study is not conducted about how to interpret, in a case that BWP switching is employed, the TCI field included in the DCI in which the BWP switching is specified to determine the TCI state of the PDSCH transmitted in the BWP resulting from switching. In a case that the TCI field in the DCI fails to be appropriately interpreted, the appropriate TCI state fails to be determined in the BWP switching, leading to degradation of communication quality.

Thus, the inventors of the present invention focused on a possible change made, in a case that a physical shared channel is scheduled by employing a certain DCI, to the cell or BWP in which the physical shared channel is scheduled, and came up with the idea of controlling interpretation of the TCI field included in the certain DCI, based on at least one of cell types (for example, cell index) and BWP types (BWP index) scheduled in accordance with the certain DCI.

The present embodiment will be described in detail with reference to the drawings as follows. Aspects illustrated below may be employed independently or may be employed in combination. Note that the TCI state for the PDSCH will hereinafter be described but that the present embodiment is not limited to this. The present embodiment is also applicable to specification of the TCI state of other channels or signals (for example, the PUSCH, PDCCH, PUCCH, and so on).

### (First Aspect)

In a first aspect, in a case that cross carrier scheduling is supported (or configured), the value of a certain field included in DCI (for example, the TCI field) is interpreted based on a cell scheduled in accordance with the DCI (scheduled cell).

In a case that the PDSCH in a certain cell is scheduled in accordance with the DCI, the UE interprets the TCI field included in the DCI, based on the configuration of the TCI state corresponding to the certain cell (for example, the TCI state configured for the certain cell). The configuration of the TCI state (for example, the TCI-state configuration) may be included in a PDSCH configuration (PDSCH-Config) configured in the active BWP of the scheduled cell (for example, active DL BWP).

A base station may configure for the UE, through higher layer signaling (RRC signaling), information related to a serving cell (for example, ServingCellConfig). The information related to the serving cell may include information related to a DL BWP (BWP-Downlink). The information related to the DL BWP may include information related to the PDSCH configuration transmitted in the BWP (pdsch-Config). The information related to the PDSCH configuration may include information related to the TCI state (for example, candidates for the TCI state applied to the PDSCH).

In a case that cross carrier scheduling is configured, based on a carrier indicator (CI) field (CIF) included in the DCI, the UE determines the cell in which the PDSCH is scheduled in accordance with the DCI. For example, in a case that a CIF value included in the DCI transmitted in the first cell specifies the second cell, based on the DCI, the UE receives the PDSCH scheduled in the second cell. In this case, the UE interprets the TCI field value in the DCI to determine the certain TCI state, based on the configuration of the TCI state configured for the second cell (for example, the configuration of the TCI state included in the PDSCH configuration configured in the active BWP of the second cell).

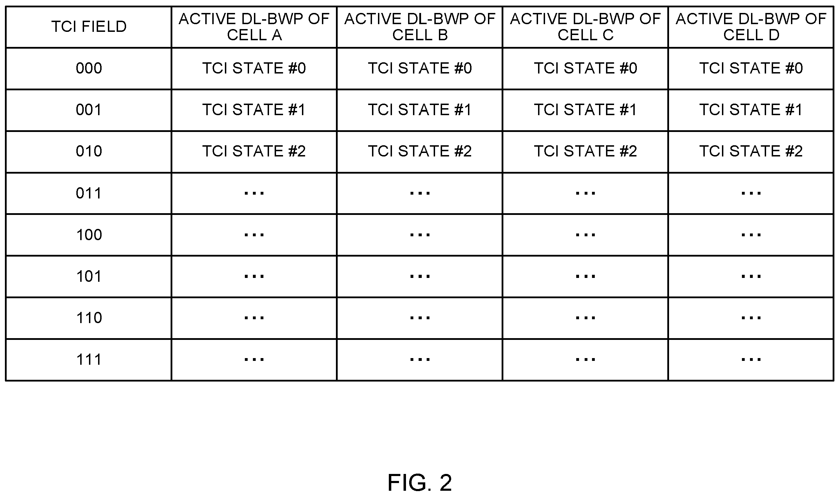

A table may be configured in which candidates for the TCI state for the BWPs of respective cells (for example, the active BWPs) are associated with each TCI field value in advance (see FIG. 2). FIG. 2 shows an example of a table in which, for the active BWPs for cell A to cell D, the TCI states are associated with each TCI field value (here, 3 bits). Note that the table shows a case that the TCI states with the same index are associated with each TCI field value in each cell but that no such limitation is intended. The TCI states with indices varying with cell may be configured.

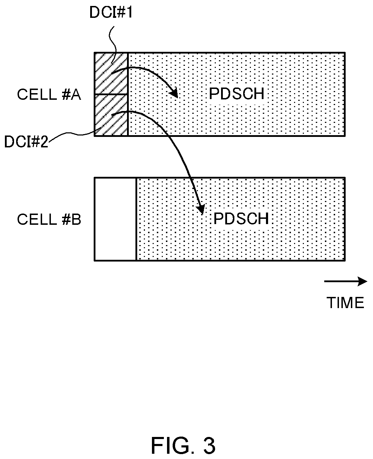

FIG. 3 shows a case where first DCI (DCI #1) transmitted in cell A is used to schedule the PDSCH in cell A (self scheduling) and a case where second DCI (DCI #2) is used to schedule the PDSCH in cell B (cross carrier scheduling). Note that the first DCI and the second DCI may be transmitted in a certain DCI format (for example, DCI format 1_1).

A case is assumed that the UE receives the first DCI indicating scheduling of the PDSCH in the active BWP of cell A. Based on the CIF included in the first DCI, the UE determines cell A to be the cell in which the PDSCH is scheduled. In this case, the UE interprets the TCI field included in the first DCI, based on the TCI state configuration (for example, candidates for the TCI state) configured for the BWP of cell A in which the PDSCH is scheduled. In other words, based on the scheduled cell specified by the CIF, the UE interprets the TCI field to determine the certain TCI state.

A case is assumed that the UE receives the second DCI indicating scheduling of the PDSCH in the active BWP of cell B. Based on the CIF included in the second DCI, the UE determines cell B to be the cell in which the PDSCH is scheduled. In this case, the UE interprets the TCI field included in the second DCI, based on the TCI state configuration (for example, candidates for the TCI state) configured for the BWP of cell B in which the PDSCH is scheduled. In other words, based on the scheduled cell specified by the CIF, the UE interprets the TCI field to determine the certain TCI state.

In this case, the TCI field in the DCI is interpreted based on the configuration of the TCI state configured for the scheduled cell (for example, the TCI state configuration included in the PDSCH configuration for the BWP of the cell). Thus, even in a case that cross carrier scheduling is performed, the appropriate TCI state can be applied to each cell to be scheduled. As a result, degradation of communication quality can be suppressed.

Note that the presence of the TCI field in DCI format 0_1 and DCI format 1_1 is configured for each CORESET through higher layer signaling (for example, TCI-state enabled/disabled). In a CORESET with no TCI field configured, the field has a 0-bit length, and it is thus assumed that corresponding zero padding is performed such that TCI formats 0_1 and 1_1 in a CORESET with the TCI field configured are equal in payload size to TCI formats 0_1 and 1_1 in the CORESET with no TCI field configured.

A case is assumed that, for the PDCCH in the active BWP of the scheduling cell, cross carrier scheduling is configured for the PDSCH in the active BWP of a different serving cell. In such a case, in a case that a plurality of TCI states are active for the PDSCH, one TCI state can be specified to the PDSCH for DCI format 1_1 configured for the search space mapped to the CORESET with the TCI field configured. However, in DCI format 1_1 configured for the search space mapped to the CORESET with no TCI field configured, the field has a 0-bit length, and thus no TCI state can be specified for the PDSCH. Consequently, the UE may fail to correctly receive the PDSCH.

Thus, in a case of receiving DCI based on a certain search space (for example, the search space corresponding to the CORESET with no TCI field configured), the UE may perform control such that a certain TCI state is employed.

For example, a case is assumed that cross carrier scheduling is performed on the PDSCH for which a plurality of TCI states are activated by DCI format 1_1 configured for the search space mapped to the CORESET with no TCI field configured. In this case, the UE may determine the TCI state of the PDSCH to demodulate the PDSCH on the assumption that, although the DCI format 1_1 includes no TCI field, the TCI field has a certain value (for example, 0).

Alternatively, the UE may perform demodulation on the assumption that the PDSCH is QCLed with a particular reference signal referenced by the UE in the scheduled cell (for example, an SS/PBCH block selected in initial access or an SS/PBCH block or a CSI-RS selected in random access).

This enables appropriate identification of the TCI state of the PDSCH or the reference signal QCLed with the PDSCH, allowing the UE to correctly receive the PDSCH.

### (Second Aspect)

In a second aspect, in a case that BWP switching employing DCI is supported (or configured), a value of a certain field included in DCI (for example, a TCI field) is interpreted based on a BWP specified by the DCI (for example, a BWP resulting from switching or an active BWP).

In a case that a certain BWP is specified (switching to the certain BWP is caused) in a certain cell by the DCI, the UE interprets the TCI field included in the DCI based on the configuration of the TCI state corresponding to the certain BWP (for example, the TCI state being configured for the certain BWP). The configuration of the TCI state (for example, the TCI-state configuration) may be included in a PDSCH configuration (PDSCH-Config) configured in the certain BWP of the certain cell.

A base station may configure for the UE, through higher layer signaling (for example, RRC signaling), information related to a serving cell (for example, ServingCellConfig). The information related to the serving cell may include information related to a DL BWP (BWP-Downlink). In a case that a plurality of DL BWPs are configured in a certain cell (for example, cell A), information for each BWP may be included in the information related to the serving cell. The information related to each BWP may include information related to the PDSCH configuration (pdsch-Config) transmitted in the BWP. The information related to the PDSCH configuration may include information related to the TCI state (for example, candidates for the TCI state applied to the PDSCH).

In a case that BWP switching is configured, the UE determines the BWP employed to transmit the PDSCH scheduled in accordance with the DCI, based on a BWP indicator (BI (Bandwidth part Indicator) field (BIF) included in the DCI. For example, in a case that a BIF value included in the DCI transmitted in the first BWP specifies the second BWP, the UE receives the PDSCH in the second BWP, based on the DCI. In this case, the UE interprets the TCI field value in the DCI to determine the certain TCI state, based on the configuration of the TCI state configured for the second BWP (for example, the configuration of the TCI state included in the PDSCH configuration configured in the second BWP).

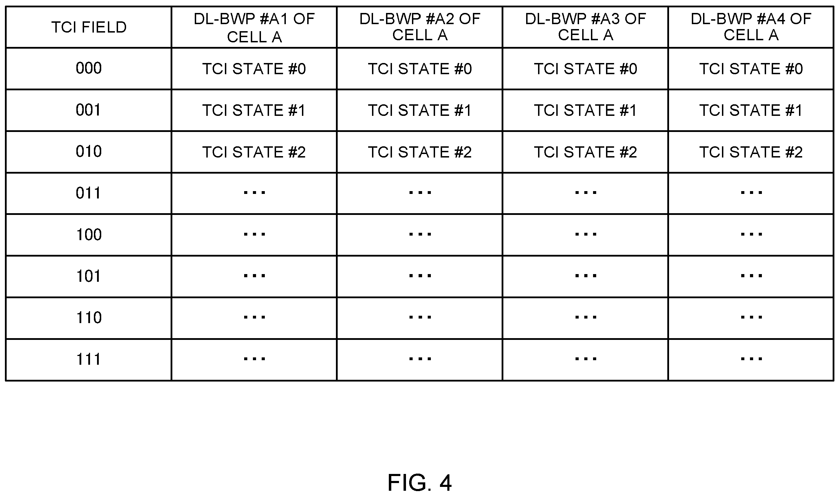

A table may be configured in which candidates for the TCI state for the respective BWPs (for example, a plurality of BWPs configured for the certain cell) are associated with each TCI field value in advance (see FIG. 4). FIG. 4 shows an example of a table in which, for BWP #A1 to BWP #A4 configured for cell A, the TCI states are associated with each TCI field value (here, 3 bits). Note that the table shows a case that the TCI states with the same index are associated with each TCI field value in each BWP but that no such limitation is intended. The TCI states with indices varying with BWP may be configured.

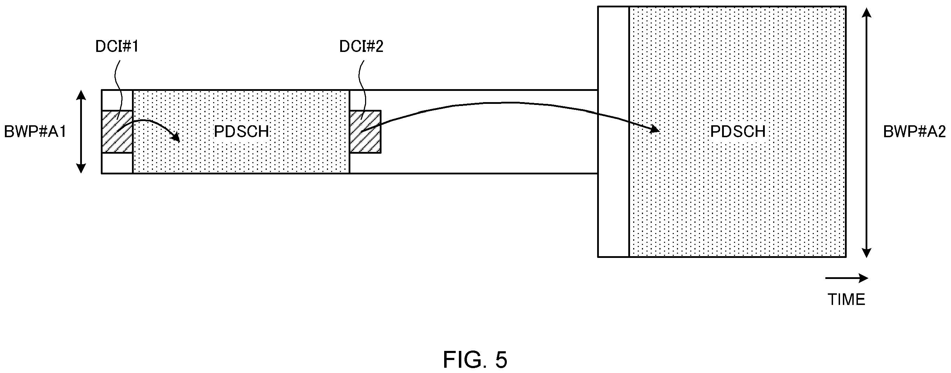

FIG. 5 shows a case where first DCI (DCI #1) transmitted in first BWP #A1 of cell A is used to schedule the PDSCH in BWP #A1 and a case where second DCI (DCI #2) specifies BWP #A2 (indicates BWP switching) and is used to schedule the PDSCH in BWP #A2. Note that the first DCI and the second DCI may be transmitted in a certain DCI format (for example, DCI format 1_1).

A case is assumed that the UE receives first DCI specifying first BWP #A1 of cell A and indicating scheduling of the PDSCH in BWP #A1. Based on the BIF included in the first DCI, the UE determines BWP #A1 to be the active BWP. In this case, the UE interprets the TCI field included in the first DCI, based on the TCI state configuration (for example, TCI candidate) configured for BWP #A1 specified by the DCI. In other words, based on the BWP specified by the BIF, the UE interprets the TCI field to determine the certain TCI state.

A case is assumed that the UE receives second DCI specifying second BWP #A2 of cell A and indicating scheduling of the PDSCH in BWP #A2. Based on the BIF included in the second DCI, the UE determines BWP #A2 to be the active BWP (for example, BWP #A1 is switched to BWP #A2. In this case, the UE interprets the TCI field included in the second DCI, based on the TCI state configuration (for example, TCI candidate) configured for BWP #A2 specified by the DCI. In other words, based on the BWP specified by the BIF, the UE interprets the TCI field to determine the certain TCI state.

In this way, the TCI field in the DCI is interpreted based on the TCI state configuration configured for the certain BWP specified by the DCI (for example, the TCI state configuration included in the PDSCH configuration for the certain BWP). Thus, even in a case that BWP switching using the DCI is performed, the appropriate TCI state can be applied to each BWP. As a result, degradation of communication quality can be suppressed.

### (Variations)

The first aspect and the second aspect may be combined for application.

For example, in a case that the UE receives the DCI for scheduling the PDSCH, the UE determines, based on the CIF included in the DCI, a certain cell in which the PDSCH is scheduled. Based on the BIF included in the DCI, the UE determines a certain BWP to be activated in the certain cell.

In this case, the UE interprets the TCI field included in the DCI, based on the TCI configuration configured for the certain BWP included in a plurality of BWPs configured for the certain cell, and determines the TCI state to be employed. In other words, the UE may determine the TCI state, based on the CIF and BIF included in the DCI.

The TCI state is thus determined based on the CIF and BIF included in the DCI, and thus the TCI state can be appropriately determined even in a case that cross carrier scheduling and BWP switching employing the DCI are configured.

### (Radio Communication System)

Hereinafter, a structure of a radio communication system according to the present embodiment will be described. In this radio communication system, the radio communication method according to each embodiment of the present disclosure described above may be used alone or may be used in combination for communication.

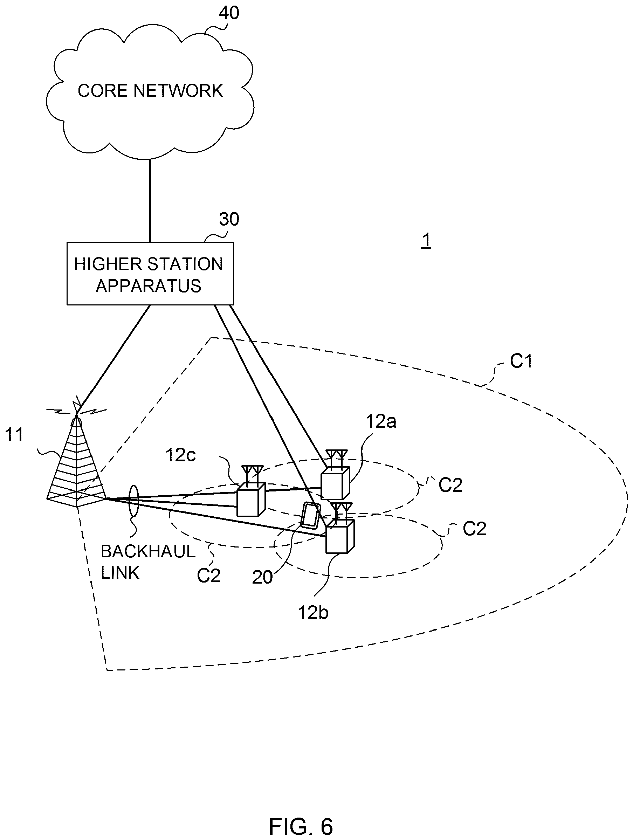

FIG. 6 is a diagram to show an example of a schematic structure of the radio communication system according to the present embodiment. A radio communication system 1 can employ carrier aggregation (CA) and/or dual connectivity (DC) in which a plurality of component carriers (carriers or cells) are integrated.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "NR (New Radio)," "FRA (Future Radio Access)," "New-RAT (Radio Access Technology)," and so on, or may be referred to as a system implementing these.

The radio communication system 1 includes a base station 11 that forms a macro cell C1 of a relatively wide coverage, and base stations 12 (12a to 12c) that form small cells C2, which are placed within the macro cell C1 and which are narrower than the macro cell C1. Also, user terminals 20 are placed in the macro cell C1 and in each small cell C2. The arrangement, the number, and the like of each cell and user terminal 20 are by no means limited to the aspect shown in the diagram.

The user terminals 20 can connect with both the base station 11 and the base stations 12. It is assumed that the user terminals 20 use the macro cell C1 and the small cells C2 at the same time by means of CA or DC. The user terminals 20 can execute CA or DC by using a plurality of cells (CCs).

The radio communication system 1 may support dual connectivity (multi-RAT dual connectivity (MR-DC)) between a plurality of RATs (Radio Access Technologies). The MR-DC may include dual connectivity (EN-DC (E-UTRA-NR Dual Connectivity)) between LTE (E-UTRA) and NR in which a base station (eNB) of LTE serves as a master node (MN) and a base station (gNB) of NR serves as a secondary node (SN), dual connectivity (NE-DC (NR-E-UTRA Dual Connectivity)) between NR and LTE in which a base station (gNB) of NR serves as an MN and a base station (eNB) of LTE (E-UTRA) serves as an SN, and so on. The radio communication system 1 may support dual connectivity between a plurality of base stations in the same RAT (for example, dual connectivity (NN-DC (NR-NR Dual Connectivity)) where both of an MN and an SN are base stations (gNB) of NR).

Between the user terminals 20 and the base station 11, communication can be carried out by using a carrier of a relatively low frequency band (for example, 2 GHz) and a narrow bandwidth (referred to as, for example, an "existing carrier," a "legacy carrier" and so on). Meanwhile, between the user terminals 20 and the base stations 12, a carrier of a relatively high frequency band (for example, 3.5 GHz, 5 GHz, and so on) and a wide bandwidth may be used, or the same carrier as that used between the user terminals 20 and the base station 11 may be used. Note that the structure of the frequency band for use in each base station is by no means limited to these.

The user terminals 20 can perform communication by using time division duplex (TDD) and/or frequency division duplex (FDD) in each cell. Furthermore, in each cell (carrier), a single numerology may be employed, or a plurality of different numerologies may be employed.

Numerologies may be communication parameters applied to transmission and/or reception of a certain signal and/or channel, and for example, may indicate at least one of a subcarrier spacing, a bandwidth, a symbol length, a cyclic prefix length, a subframe length, a TTI length, the number of symbols per TTI, a radio frame structure, a particular filter processing performed by a transceiver in a frequency domain, a particular windowing processing performed by a transceiver in a time domain, and so on. For example, if certain physical channels use different subcarrier spacings of the OFDM symbols constituted and/or different numbers of the OFDM symbols, it may be referred to as that the numerologies are different.

A wired connection (for example, means in compliance with the CPRI (Common Public Radio Interface) such as an optical fiber, an X2 interface and so on) or a wireless connection may be established between the base station 11 and the base stations 12 (or between two base stations 12).

The base station 11 and the base stations 12 are each connected with a higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each base station 12 may be connected with the higher station apparatus 30 via the base station 11.

Note that the base station 11 is a base station having a relatively wide coverage, and may be referred to as a "macro base station," a "central node," an "eNB (eNodeB)," a "transmitting/receiving point" and so on. The base stations 12 are base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter, the base stations 11 and 12 will be collectively referred to as "base stations 10," unless specified otherwise.

Each of the user terminals 20 is a terminal that supports various communication schemes such as LTE and LTE-A, and may include not only mobile communication terminals (mobile stations) but stationary communication terminals (fixed stations).

In the radio communication system 1, as radio access schemes, orthogonal frequency division multiple access (OFDMA) is applied to the downlink, and single carrier frequency division multiple access (SC-FDMA) and/or OFDMA is applied to the uplink.

OFDMA is a multi-carrier communication scheme to perform communication by dividing a frequency band into a plurality of narrow frequency bands (subcarriers) and mapping data to each subcarrier. SC-FDMA is a single carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are by no means limited to the combinations of these, and other radio access schemes may be used.

In the radio communication system 1, a downlink shared channel (PDSCH (Physical Downlink Shared Channel), which is used by each user terminal 20 on a shared basis, a broadcast channel (PBCH (Physical Broadcast Channel)), downlink L1/L2 control channels and so on, are used as downlink channels. User data, higher layer control information, SIBs (System Information Blocks) and so on are communicated on the PDSCH. The MIBs (Master Information Blocks) are communicated on the PBCH.

The downlink L1/L2 control channels include a PDCCH (Physical Downlink Control Channel), an EPDCCH (Enhanced Physical Downlink Control Channel), a PCFICH (Physical Control Format Indicator Channel), a PHICH (Physical Hybrid-ARQ Indicator Channel) and so on. Downlink control information (DCI), including PDSCH and/or PUSCH scheduling information, and so on are communicated on the PDCCH.

Note that the scheduling information may be reported by the DCI. For example, the DCI scheduling DL data reception may be referred to as "DL assignment," and the DCI scheduling UL data transmission may be referred to as "UL grant."

The number of OFDM symbols to use for the PDCCH is communicated on the PCFICH. Transmission confirmation information (for example, also referred to as "retransmission control information," "HARQ-ACK," "ACK/NACK," and so on) of HARQ (Hybrid Automatic Repeat reQuest) to a PUSCH is transmitted on the PHICH. The EPDCCH is frequency-division multiplexed with the PDSCH (downlink shared data channel) and used to communicate DCI and so on, like the PDCCH.

In the radio communication system 1, an uplink shared channel (PUSCH (Physical Uplink Shared Channel)), which is used by each user terminal 20 on a shared basis, an uplink control channel (PUCCH (Physical Uplink Control Channel)), a random access channel (PRACH (Physical Random Access Channel)) and so on are used as uplink channels. User data, higher layer control information and so on are communicated on the PUSCH. In addition, radio quality information (CQI (Channel Quality Indicator)) of the downlink, transmission confirmation information, scheduling request (SR), and so on are transmitted on the PUCCH. By means of the PRACH, random access preambles for establishing connections with cells are communicated.

In the radio communication system 1, a cell-specific reference signal (CRS), a channel state information-reference signal (CSI-RS), a demodulation reference signal (DMRS), a positioning reference signal (PRS), and so on are transmitted as downlink reference signals. In the radio communication system 1, a measurement reference signal (SRS (Sounding Reference Signal)), a demodulation reference signal (DMRS), and so on are transmitted as uplink reference signals. Note that DMRS may be referred to as a "user terminal specific reference signal (UE-specific Reference Signal)." Transmitted reference signals are by no means limited to these.

### <Base Station>

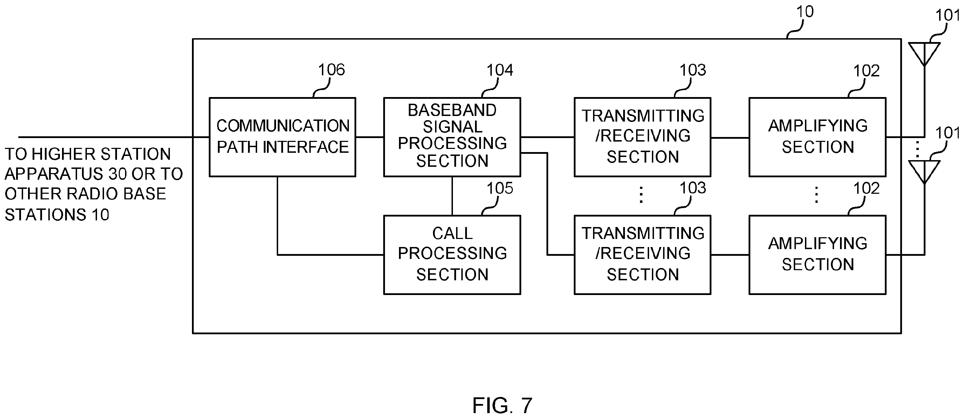

FIG. 7 is a diagram to show an example of an overall structure of a base station according to the present embodiment. A base station 10 includes a plurality of transmitting/receiving antennas 101, amplifying sections 102, transmitting/receiving sections 103, a baseband signal processing section 104, a call processing section 105 and a communication path interface 106. Note that the base station 10 may be configured to include one or more transmitting/receiving antennas 101, one or more amplifying sections 102 and one or more transmitting/receiving sections 103.

User data to be transmitted from the base station 10 to the user terminal 20 by the downlink is input from the higher station apparatus 30 to the baseband signal processing section 104, via the communication path interface 106.

In the baseband signal processing section 104, the user data is subjected to transmission processes, such as a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ transmission process), scheduling, transport format selection, channel coding, an inverse fast Fourier transform (IFFT) process, and a precoding process, and the result is forwarded to each transmitting/receiving section 103. Furthermore, downlink control signals are also subjected to transmission processes such as channel coding and inverse fast Fourier transform, and the result is forwarded to each transmitting/receiving section 103.

The transmitting/receiving sections 103 convert baseband signals that are pre-coded and output from the baseband signal processing section 104 on a per antenna basis, to have radio frequency bands and transmit the result. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted with transmitters/receivers, transmitting/receiving circuits or transmitting/receiving apparatus that can be described based on general understanding of the technical field to which the present disclosure pertains. Note that each transmitting/receiving section 103 may be structured as a transmitting/receiving section in one entity, or may be constituted with a transmitting section and a receiving section.

Meanwhile, as for uplink signals, radio frequency signals that are received in the transmitting/receiving antennas 101 are amplified in the amplifying sections 102. The transmitting/receiving sections 103 receive the uplink signals amplified in the amplifying sections 102. The transmitting/receiving sections 103 convert the received signals into the baseband signal through frequency conversion and outputs to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (setting up, releasing and so on) for communication channels, manages the state of the base station 10, manages the radio resources and so on.

The communication path interface 106 transmits and/or receives signals to and/or from the higher station apparatus 30 via a certain interface. The communication path interface 106 may transmit and/or receive signals (backhaul signaling) with other base stations 10 via an inter-base station interface (for example, an optical fiber in compliance with the CPRI (Common Public Radio Interface) and an X2 interface).

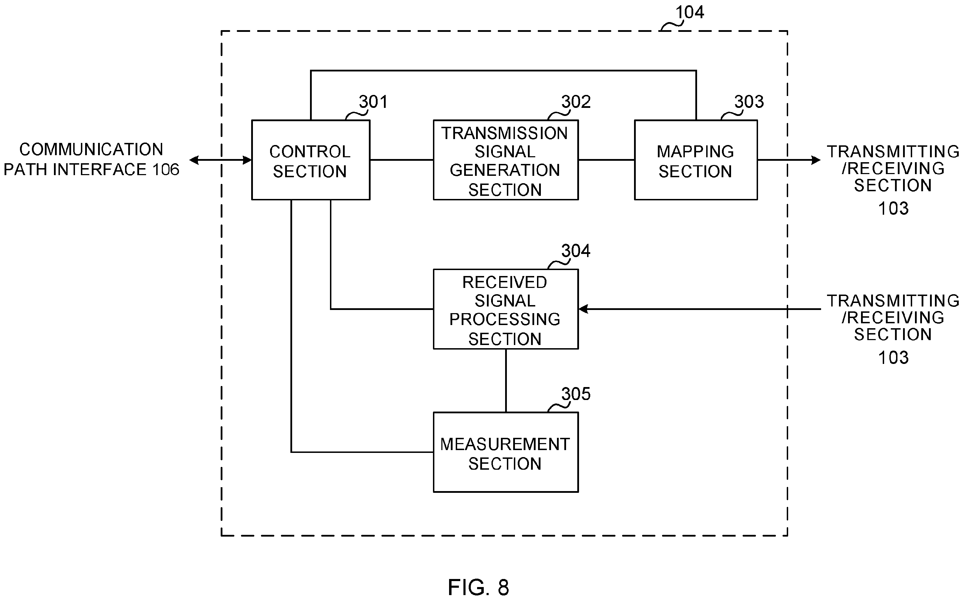

FIG. 8 is a diagram to show an example of a functional structure of the base station according to the present embodiment. Note that, the present example primarily shows functional blocks that pertain to characteristic parts of the present embodiment, and it is assumed that the base station 10 may include other functional blocks that are necessary for radio communication as well.

The baseband signal processing section 104 at least includes a control section (scheduler) 301, a transmission signal generation section 302, a mapping section 303, a received signal processing section 304, and a measurement section 305. Note that these structures may be included in the base station 10, and some or all of the structures do not need to be included in the baseband signal processing section 104.

The control section (scheduler) 301 controls the whole of the base station 10. The control section 301 can be constituted with a controller, a control circuit or control apparatus that can be described based on general understanding of the technical field to which the present disclosure pertains.

The control section 301, for example, controls the generation of signals in the transmission signal generation section 302, the mapping of signals by the mapping section 303, and so on. The control section 301 controls the signal receiving processes in the received signal processing section 304, the measurements of signals in the measurement section 305, and so on.

The control section 301 controls the scheduling (for example, resource assignment) of system information, a downlink data signal (for example, a signal transmitted on the PDSCH), a downlink control signal (for example, a signal transmitted on the PDCCH and/or the EPDCCH. Transmission confirmation information, and so on). Based on the results of determining necessity or not of retransmission control to the uplink data signal, or the like, the control section 301 controls generation of a downlink control signal, a downlink data signal, and so on.

The control section 301 controls the scheduling of a synchronization signal (for example, PSS (Primary Synchronization Signal)/SSS (Secondary Synchronization Signal)), a downlink reference signal (for example, CRS, CSI-RS, DMRS), and so on.

The control section 301 controls the scheduling of an uplink data signal (for example, a signal transmitted on the PUSCH), an uplink control signal (for example, a signal transmitted on the PUCCH and/or the PUSCH. Transmission confirmation information, and so on), a random access preamble (for example, a signal transmitted on the PRACH), an uplink reference signal, and so on.

The transmission signal generation section 302 generates downlink signals (downlink control signals, downlink data signals, downlink reference signals and so on) based on commands from the control section 301 and outputs the downlink signals to the mapping section 303. The transmission signal generation section 302 can be constituted with a signal generator, a signal generation circuit or signal generation apparatus that can be described based on general understanding of the technical field to which the present disclosure pertains.

For example, the transmission signal generation section 302 generates DL assignment to report assignment information of downlink data and/or UL grant to report assignment information of uplink data, based on commands from the control section 301. The DL assignment and the UL grant are both DCI, and follow the DCI format. For a downlink data signal, encoding processing and modulation processing are performed in accordance with a coding rate, modulation scheme, or the like determined based on channel state information (CSI) from each user terminal 20.

The mapping section 303 maps the downlink signals generated in the transmission signal generation section 302 to certain radio resources, based on commands from the control section 301, and outputs these to the transmitting/receiving sections 103. The mapping section 303 can be constituted with a mapper, a mapping circuit or mapping apparatus that can be described based on general understanding of the technical field to which the present disclosure pertains.

The received signal processing section 304 performs receiving processes (for example, demapping, demodulation, decoding and so on) of received signals that are input from the transmitting/receiving sections 103. Here, the received signals are, for example, uplink signals that are transmitted from the user terminals 20 (uplink control signals, uplink data signals, uplink reference signals and so on). The received signal processing section 304 can be constituted with a signal processor, a signal processing circuit or signal processing apparatus that can be described based on general understanding of the technical field to which the present disclosure pertains.

The received signal processing section 304 outputs the decoded information acquired through the receiving processes to the control section 301. For example, if the received signal processing section 304 receives the PUCCH including HARQ-ACK, the received signal processing section 304 outputs the HARQ-ACK to the control section 301. The received signal processing section 304 outputs the received signals and/or the signals after the receiving processes to the measurement section 305.

The measurement section 305 conducts measurements with respect to the received signals. The measurement section 305 can be constituted with a measurer, a measurement circuit or measurement apparatus that can be described based on general understanding of the technical field to which the present disclosure pertains.

For example, the measurement section 305 may perform RRM (Radio Resource Management) measurement, CSI (Channel State Information) measurement, and so on, based on the received signal. The measurement section 305 may measure a received power (for example, RSRP (Reference Signal Received Power)), a received quality (for example, RSRQ (Reference Signal Received Quality), an SINR (Signal to Interference plus Noise Ratio), an SNR (Signal to Noise Ratio)), a signal strength (for example, RSSI (Received Signal Strength Indicator)), channel information (for example, CSI), and so on. The measurement results may be output to the control section 301.

Note that the transmitting/receiving section 103 transmits downlink control information including the field specifying the state of the transmission configuration indication (TCI). The transmitting/receiving section 103 may transmit, for each cell to the UE, information related to the configuration of the TCI state (for example, TCI state candidates) corresponding to the TCI field value included in the DCI.

The control section 301 may control configuration of at least one of the cell group, cell, BWP, CORESET, search space, and cross carrier scheduling and control transmission of configuration information regarding at least one of these.

The control section 301 controls the TCI field value based on at least one of the cell scheduled in accordance with the downlink control information and the bandwidth part (BWP) specified by the downlink control information. For example, the control section 301 may control determination of the state of TCI specified by the TCI field, based on at least one of the carrier indicator (CI) and the BWP indicator (BI) included in the downlink control information.

The control section 301 may perform control such that candidates for the state of TCI specified by the TCI field are configured for each cell. The control section 301 may perform control such that candidates for the state of TCI specified by the TCI field are configured for each BWP.

### <User Terminal>

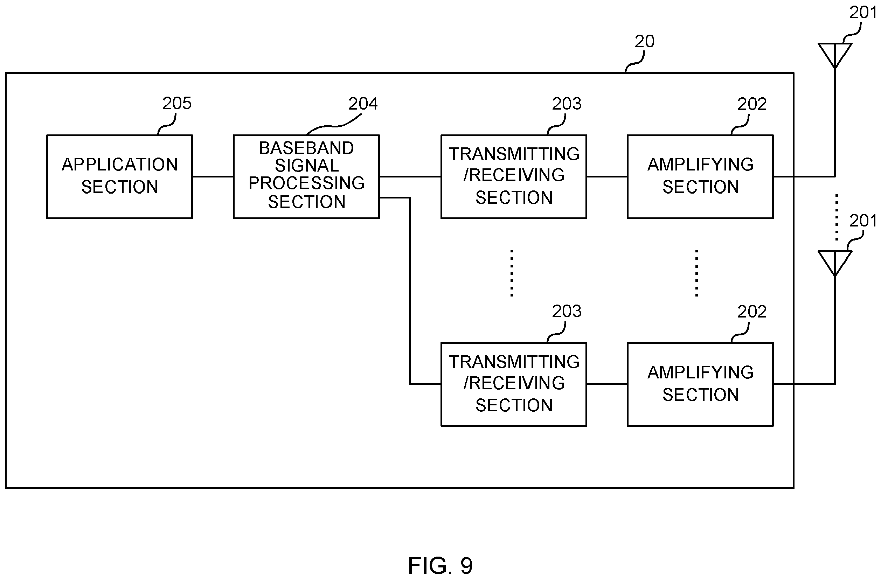

FIG. 9 is a diagram to show an example of an overall structure of a user terminal according to the present embodiment. A user terminal 20 includes a plurality of transmitting/receiving antennas 201, amplifying sections 202, transmitting/receiving sections 203, a baseband signal processing section 204 and an application section 205. Note that the user terminal 20 may be configured to include one or more transmitting/receiving antennas 201, one or more amplifying sections 202 and one or more transmitting/receiving sections 203.

Radio frequency signals that are received in the transmitting/receiving antennas 201 are amplified in the amplifying sections 202. The transmitting/receiving sections 203 receive the downlink signals amplified in the amplifying sections 202. The transmitting/receiving sections 203 convert the received signals into baseband signals through frequency conversion, and output the baseband signals to the baseband signal processing section 204. The transmitting/receiving sections 203 can be constituted with transmitters/receivers, transmitting/receiving circuits or transmitting/receiving apparatus that can be described based on general understanding of the technical field to which the present disclosure pertains. Note that each transmitting/receiving section 203 may be structured as a transmitting/receiving section in one entity, or may be constituted with a transmitting section and a receiving section.

The baseband signal processing section 204 performs, on each input baseband signal, an FFT process, error correction decoding, a retransmission control receiving process, and so on. The downlink user data is forwarded to the application section 205. The application section 205 performs processes related to higher layers above the physical layer and the MAC layer, and so on. In the downlink data, broadcast information may be also forwarded to the application section 205.

Meanwhile, the uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203.

The transmitting/receiving sections 203 convert the baseband signals output from the baseband signal processing section 204 to have radio frequency band and transmit the result. The radio frequency signals having been subjected to frequency conversion in the transmitting/receiving sections 203 are amplified in the amplifying sections 202, and transmitted from the transmitting/receiving antennas 201.

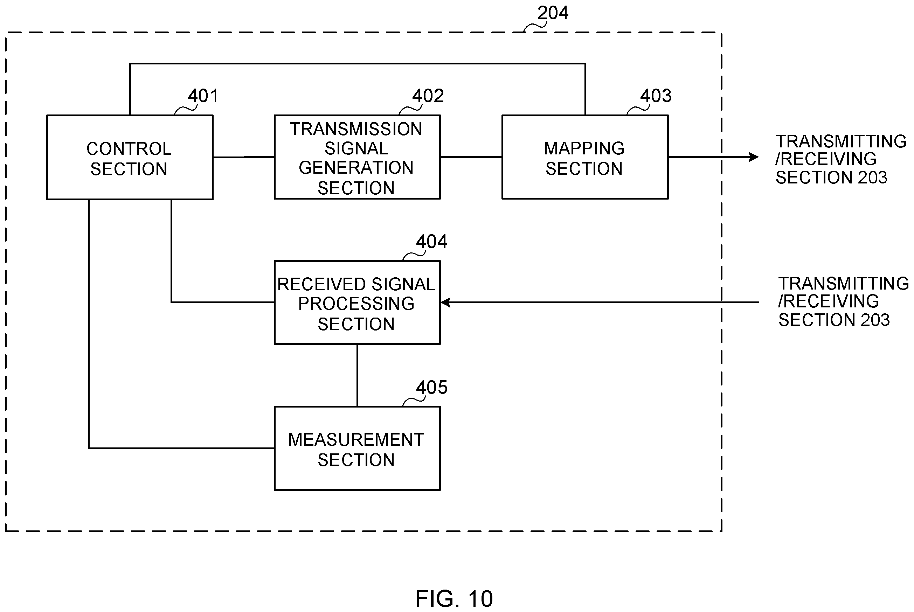

FIG. 10 is a diagram to show an example of a functional structure of a user terminal according to the present embodiment. Note that, the present example primarily shows functional blocks that pertain to characteristic parts of the present embodiment, and it is assumed that the user terminal 20 may include other functional blocks that are necessary for radio communication as well.

The baseband signal processing section 204 provided in the user terminal 20 at least includes a control section 401, a transmission signal generation section 402, a mapping section 403, a received signal processing section 404 and a measurement section 405. Note that these structures may be included in the user terminal 20, and some or all of the structures do not need to be included in the baseband signal processing section 204.

The control section 401 controls the whole of the user terminal 20. The control section 401 can be constituted with a controller, a control circuit or control apparatus that can be described based on general understanding of the technical field to which the present disclosure pertains.

The control section 401, for example, controls the generation of signals in the transmission signal generation section 402, the mapping of signals by the mapping section 403, and so on. The control section 401 controls the signal receiving processes in the received signal processing section 404, the measurements of signals in the measurement section 405, and so on.

The control section 401 acquires a downlink control signal and a downlink data signal transmitted from the base station 10, from the received signal processing section 404. The control section 401 controls generation of an uplink control signal and/or an uplink data signal, based on the results of determining necessity or not of retransmission control to a downlink control signal and/or a downlink data signal.

The control section 401 may control monitoring of the DCI that is CRC scrambled with a certain identifier (at least one of, for example, C-RNTI, CS-RNTI, MCS-C-RNTI, SI-RNTI, P-RNTI, RA-RNTI, TC-RNTI, INT-RNTI, SFI-RNTI, TPC-PUSCH-RNTI, TPC-PUCCH-RNTI, TPC-SRS-RNTI, and SP-CSI-RNTI).

In a case that the control section 401 acquires a variety of information reported by the base station 10 from the received signal processing section 404, the control section 401 may update parameters to use for control, based on the information.

The transmission signal generation section 402 generates uplink signals (uplink control signals, uplink data signals, uplink reference signals and so on) based on commands from the control section 401, and outputs the uplink signals to the mapping section 403. The transmission signal generation section 402 can be constituted with a signal generator, a signal generation circuit or signal generation apparatus that can be described based on general understanding of the technical field to which the present disclosure pertains.

For example, the transmission signal generation section 402 generates an uplink control signal about transmission confirmation information, the channel state information (CSI), and so on, based on commands from the control section 401. The transmission signal generation section 402 generates uplink data signals, based on commands from the control section 401. For example, when a UL grant is included in a downlink control signal that is reported from the base station 10, the control section 401 commands the transmission signal generation section 402 to generate the uplink data signal.

The mapping section 403 maps the uplink signals generated in the transmission signal generation section 402 to radio resources, based on commands from the control section 401, and outputs the result to the transmitting/receiving sections 203. The mapping section 403 can be constituted with a mapper, a mapping circuit or mapping apparatus that can be described based on general understanding of the technical field to which the present disclosure pertains.

The received signal processing section 404 performs receiving processes (for example, demapping, demodulation, decoding and so on) of received signals that are input from the transmitting/receiving sections 203. Here, the received signals are, for example, downlink signals transmitted from the base station 10 (downlink control signals, downlink data signals, downlink reference signals and so on). The received signal processing section 404 can be constituted with a signal processor, a signal processing circuit or signal processing apparatus that can be described based on general understanding of the technical field to which the present disclosure pertains. The received signal processing section 404 can constitute the receiving section according to the present disclosure.

The received signal processing section 404 outputs the decoded information acquired through the receiving processes to the control section 401. The received signal processing section 404 outputs, for example, broadcast information, system information, RRC signaling, DCI and so on, to the control section 401. The received signal processing section 404 outputs the received signals and/or the signals after the receiving processes to the measurement section 405.

The measurement section 405 conducts measurements with respect to the received signals. The measurement section 405 can be constituted with a measurer, a measurement circuit or measurement apparatus that can be described based on general understanding of the technical field to which the present disclosure pertains.

For example, the measurement section 405 may perform RRM measurement, CSI measurement, and so on, based on the received signal. The measurement section 405 may measure a received power (for example, RSRP), a received quality (for example, RSRQ, SINR, SNR), a signal strength (for example, RSSI), channel information (for example, CSI), and so on. The measurement results may be output to the control section 401.

Note that the transmitting/receiving section 203 receives downlink control information including the field specifying the state of the transmission configuration indication (TCI). The transmitting/receiving section 103 may receive information related to the configuration of the TCI state (for example, TCI state candidates) corresponding to the TCI field value for each cell.

The control section 401 may control configuration of at least one of the cell group, cell, BWP, CORESET, search space, and cross carrier scheduling and control reception of configuration information regarding at least one of these.

The control section 401 controls interpretation of the TCI field based on at least one of the cell scheduled in accordance with the downlink control information and the bandwidth part (BWP) specified by the downlink control information, to determine the state of TCI specified by the TCI field. For example, the control section 401 may control interpretation of the state of TCI specified by the TCI field by using at least one of the carrier indicator (CI) and the BWP indicator (BI) included in the downlink control information.

The control section 401 may determine the TCI state based on CI on the assumption that candidates for the state of TCI specified by the TCI field are configured for each cell. The control section 401 may determine the TCI state based on BI on the assumption that candidates for the state of TCI specified by the TCI field are configured for each BWP.

### <Hardware Structure>

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

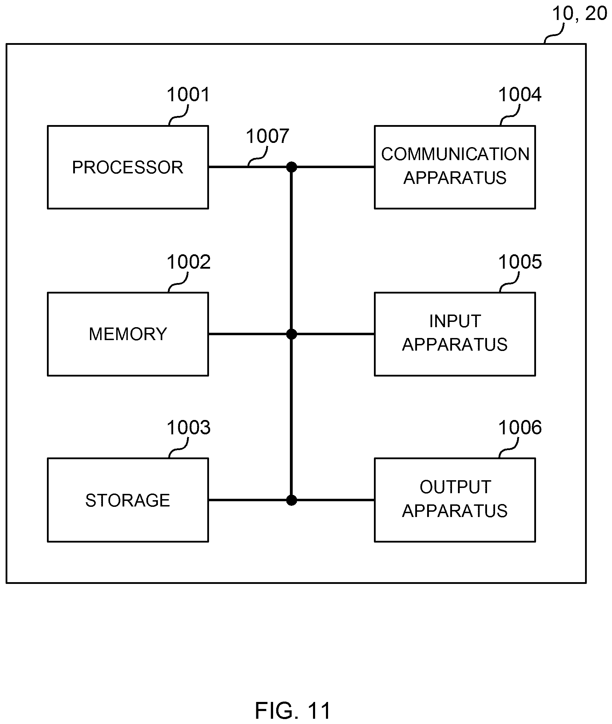

For example, a base station, a user terminal, and so on according to one embodiment of the present disclosure may function as a computer that executes the processes of the radio communication method of the present disclosure. FIG. 11 is a diagram to show an example of a hardware structure of the base station and the user terminal according to one embodiment. Physically, the above-described base station 10 and user terminal 20 may each be formed as computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 401 of each user terminal 20 may be implemented by control programs that are stored in the memory 1002 and that operate on the processor 1001, and other functional blocks may be implemented likewise.

The memory 1002 is a computer-readable recording medium, and may be constituted with, for example, at least one of a ROM (Read Only Memory), an EPROM (Erasable Programmable ROM), an EEPROM (Electrically EPROM), a RAM (Random Access Memory), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving antennas 101 (201), amplifying sections 102 (202), transmitting/receiving sections 103 (203), communication path interface 106, and so on may be implemented by the communication apparatus 1004. In the transmitting/receiving section 103 (203), the transmitting section 103a (203a) and the receiving section 103b (203b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an ASIC (Application-Specific Integrated Circuit), a PLD (Programmable Logic Device), an FPGA (Field Programmable Gate Array), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (OFDM (Orthogonal Frequency Division Multiplexing) symbols, SC-FDMA (Single Carrier Frequency Division Multiple Access) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (PRB (Physical RB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a BWP for the UL (UL BWP) and a BWP for the DL (DL BWP). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH (Physical Uplink Control Channel), PDCCH (Physical Downlink Control Channel), and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (master information block (MIB), system information blocks (SIBs), and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure may be used interchangeably.

In the present disclosure, the terms such as "precoding," a "precoder," a "weight (precoding weight)," "quasi-co-location (QCL)," a "TCI state (Transmission Configuration Indication state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNodeB (eNB)," a "gNodeB (gNB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an IoT (Internet of Things) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "D2D (Device-to-Device)," "V2X (Vehicle-to-Everything)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A user terminal comprising:
a receiving section that receives downlink control information including a field specifying a state of transmission configuration indication (TCI); and
a control section that determines a state of TCI specified by the field, based on at least one of a cell scheduled in accordance with the downlink control information and a bandwidth part (BWP) specified by the downlink control information.

2. The user terminal according to claim 1, wherein the control section employs at least one of a carrier indicator (CI) and a BWP indicator (BI) included in the downlink control information to control interpretation of the state of TCI specified by the field.

3. The user terminal according to claim 1 or 2, wherein candidates for the state of TCI specified by the field are configured for each cell.

4. The user terminal according to any one of claims 1 to 3, wherein candidates for the state of TCI specified by the field are configured for each BWP.

5. A radio communication method comprising:
receiving downlink control information including a field specifying a state of transmission configuration indication (TCI); and
determining a state of TCI specified by the field, based on at least one of a cell scheduled in accordance with the downlink control information and a bandwidth part (BWP) specified by the downlink control information.
